# EUROPÄISCHE PATENTSCHRIFT

(11) **EP 1 510 431 B1**
(45) Veröffentlichungstag und Bekanntmachung des Hinweises auf die Patenterteilung: **22.12.2010**
(21) Anmeldenummer: 04019800.4
(22) Anmeldetag: 20.08.2004
(51) Int. Cl.: B62D 1/06

(54) **Dreidimensional verformbares Heizelement, Lenkradheizung und Verfahren zur Herstellung einer solchen Lenkradheizung**
Three-dimensional deformable heating element, heatable steering wheel and production process for such a heatable steering wheel
Elément de chauffage deformable tridimensionnel, volant chauffant et procédé de production d'un tel volant chauffant

(30) Priorität: 26.08.2003 DE 10339087
(43) Veröffentlichungstag der Anmeldung: 02.03.2005
(73) Patentinhaber: I.G. Bauerhin GmbH, Elektrotechnische Werke, 63584 Gründau (DE)
(72) Erfinder: Hilmer, Josef, 63584 Gründau (DE)
(74) Vertreter: Müller-Wolff, Thomas

(56) Entgegenhaltungen:
- DE-A1- 3 339 500
- DE-A1- 10 126 134
- GB-A- 689 548
- JP-A- 61 081 270
- US-A- 6 057 530

## Beschreibung

Die Erfindung betrifft ein dreidimensional verformbares Heizelement, insbesondere für beheizbare Bedienungsflächen und für Lenkradheizungen, bestehend aus einem oder mehreren mäanderförmig auf einer Folie als Grundmaterial verlegten Heizleitern 3, 8 und einer Folie 7 als Deckschicht, welche zur Oberfläche des Heizelementes hin eine Sperrschicht für gasförmige, flüssige und/oder gelöste feste Chemikalien bildet, wobei der oder die Heizleiter 3, 8 zwischen den Folien 1, 2, 6, 7 verklebt sind. Die Erfindung betrifft ferner eine Lenkradheizung sowie ein Verfahren zur Herstellung einer Lenkradheizung.

Konventionell sind Heizelemente der eingangs genannten Art auf einem flexiblen Grundmaterial wie beispielsweise einem Flies aufgebaut, das an den Lenkradkörper beispielsweise durch Kleben befestigt wird. Ein weiches Grundmaterial wird insbesondere dann benötigt, wenn der über dieses Grundmaterial aufgebrachte Überzug eine besondere Struktur wie z.B. Noppen oder dergleichen aufweist. Dieser Aufbau wird aus verschiedenen Gründen gewählt, einerseits um durch eine weiche Einbettung den Heizleiter auf dem harten Grundkörper zu schützen und andererseits um eine angenehme Griffigkeit in Verbindung mit den Strukturen des Lenkrades zu erreichen.

Problematisch ist jedoch die Herstellung dieses Aufbaus. Zunächst muss das weiche Zwischenmaterial am Grundkörper befestigt und dabei Sorge getragen werden, dass das Heizleitermaterial an die richtige Stelle gelangt und dort fixiert werden kann ohne einen der Heizleiter zu verletzen. Dann müsste der Überzug vorsichtig befestigt werden, damit die Heizleiter nicht verrutschen oder durch eine mechanische Beanspruchung des Verbundes aus Grundmaterial, Zwischenschicht und Oberflächenmaterial diese nicht beschädigt werden.

Bei dem fertigen Heizelement hat sich ferner eine erhöhte Abnutzung durch Korrosion in Verbindung mit mechanischer Beanspruchung gezeigt. Die Korrosion wird dadurch begünstigt, dass durch das Bezugsmaterial aggressive gasförmige, flüssige oder gelöste feste Chemikalien eindringen, die im Schweiß, in Reinigungsmitteln oder unter Wärmeeinwirkung aus der Verbindung mehrerer Kunststoffe mittels Klebern/Lösungsmitteln entstehen.

Die unter den genannten Umständen auftretenden Korrosionserscheinungen werden von Beginn an dadurch verstärkt, dass insbesondere in der kalten Jahreszeit erhebliche Stromstärken durch die Heizelemente fließen. Diese bewirken an den durch Korrosion geschwächten Heizleitern höhere Spannungsabfälle als gewünscht, so dass Temperaturunterschiede auftreten können, die sich im Griffbereich nachteilig auswirken und zusätzlich den beginnenden Zersetzungsprozess/Auflösungsvorgang an den Heizdrähten beschleunigen.

Aus der DE 10126134A1 ist ein für die Ansprüche 1,8 und 9 gattungsbildendes Verfahren zur Herstellung flächiger Heizelemente, insbesondere zur Beheizung stark gewölbten Flächen sowie Bedienungselementen von Kraftfahrzeugen bekannt, bei denen der Heizleiter unter Beibehaltung eines stabilisierenden Randes aus einer leitfähigen Folie ausgeschnitten wird. Auf der einen Seite des Heizleiters wird eine Kunststofffolie und auf der anderen Seite ein mit einer Abdeckfolie versehenes beidseitiges Klebeband aufgebracht und dann der Rand ab- und die Endkontur des Heizleiters ausgeschnitten. Beim Aufbringen auf die zu beheizende Oberfläche**,** beispielsweise auf ein Lenkrad, wird die Abdeckfolie des beidseitigen Klebebandes entfernt und das Heizelement derart auf die zu beheizende Fläche aufgeklebt, dass der Heizleiter faltenfrei auf die innere Oberfläche des Lenkrades umgebogen und aufgeklebt werden kann. Statt des Klebebandes kann auch ein Kleber verwendet werden, der unmittelbar vor der Montage auf das Heizelement aufgebracht wird Im aufgeklebten Zustand hat das über dem Heizleiter liegende, doppelseitige Klebeband die gleiche Kontur wie die Kunststofffolie, die aus dünnem, sehr flexiblem und dehnfähigem Material hergestellt werden kann. Die Heizung erwärmt das Lenkrad gleichmaßig und ist durch die Kunststofffolie vor Handschweiß geschützt.

Bei dem in der US 6057530A beschriebenen Verfahren zur Herstellung eines Heizelementes mit einem gewebten, Kohlefaserhaltigen Textilmaterial werden beidseitig zwei isolierende Schichten auf das elektrisch leitende Kemmaterial aufgebracht und unter Aufbringung eines Anpressdruckes mit diesem verschmolzen.

Ferner ist in der DE 3339500A1 ein Lenkrad mit eingebauter Heizvorrichtung beschrieben, die aus einem Griffring und einem darum gewickelten, Wärme leitenden Flachmaterial sowie aus einem elektrisch leitenden, Wärme erzeugenden, innig um das isolierende Flachmaterial angebrachten Bauteil und einer außen liegenden Hülle besteht. Das Wärme leitende Flachmaterial kann aus einer Metallfolie, insbesondere einer Kupfer- oder Aluminiumfolie bestehen. Das isolierende Flachmaterial ist vorzugsweise aus einer Kunststofffolie hergestellt. Die Montage · erfolgt durch eine Heizpress-Klebetechnik, bei der die einzelnen Schichten (Flachmaterial, Bauteil, Hülle) miteinander verklebt werden.

Aufgabe der vorliegenden Erfindung ist es, die geschilderten Nachteile zu vermeiden und ein dreidimensional verformbares Heizelement gemäß Oberbegriff von Patentanspruch 1 insbesondere für beheizbare Bedienungsflächen und für Lenkradheizungen zu entwickeln, das leicht herstellbar ist und auch unter korrosiven Bedingungen eine lange Haltbarkeit aufweist. Durch die Verwendung von Litzenmaterial soll es ermöglicht werden, einerseits eine noch engere und dennoch gleichmäßigere Wärmeverteilung auf dem Heizelement auszubilden, andererseits durch dreidimensionale Verformung sowohl Heizleiterfreiräume als auch Räume mit verdichteter Heizleiteranordnung bei gleichmäßiger Gesamt-Wandstärke der Lenkradheizung zu schaffen, um eine gezielte Temperaturerhöhung oder Temperaturabsenkung zu ermöglichen.

Die Aufgabe wird erfindungsgemäß durch die in den Patentansprüchen 1 und 8 angegebenen Merkmale gelöst. Durch die Verwendung von Schrumpffolien als Deckschicht wird die Herstellung einer dreidimensional verformten Heizfläche in einem Arbeitsgang und eine verdichtete Heizleiteranordnung sowie die Schaffung von Heizleiterfreiräumen ermöglicht. In Verbindung mit einer selbstklebenden Folie als Grundmaterial, auf der die Heizleiter unter Berücksichtung der späteren dreidimensionalen Verformung aufgebracht wurden, lassen sich gezielt Heizflächen mit verdichteter Heizleiteranordnung und mit Heizteiterfreiräumen in einem Arbeitsgang herstellen.

Darüber hinaus ergibt sich bei der Herstellung einer Lenkradheizung mit einer Deckfolie aus PU-Material der Vorteil, dass das Einpressen des PU-Schaums in den Spalt zwischen Lenkradbezug bzw. Überzugsmaterial 10 wesentlich erleichtert wird. Denn das Fließverhalten des PU-Schaums ist auf der artgleichen PU-Deckschicht besonders vorteilhaft durch geringe Reibungsverluste und durch eine günstige Grenzflächenspannung selbst bei sehr geringen Spaltquerschnitten zwischen Deckschicht und Überzugsmaterial 10.

Ferner wird die Korrosionsfestigkeit von Heizleitern, die auf einer Folie als Grundmaterial angeordnet sind und über die mindestens eine Deckfolie gelegt wird, wesentlich verbessert. Dieses gilt insbesondere für geschäumte Lenkräder, bei denen unterhalb des Lenkradbezuges ein PU-Schaummaterial unter Druck eingepresst wurde. Nach den Erfahrungen des Erfinders kann durch den porösen Schaumstoffinsbesondere an Stellen geringer Schaumdicken- das Einbringen von korrosiven Stoffen nicht mit Sicherheit verhindert werden, so dass sich die Verwendung einer Deckfolie als Sperrschicht für gasförmige, flüssige und/oder gelöste feste Chemikalien in Verbindung mit dem Schaummaterial sich als besonders sinnvoll erwiesen hat.

Im folgenden wird die Erfindung anhand mehrerer Ausführungsbeispiele erläutert. Es zeigen:
- Fig. 1: Querschnitt durch ein erfindungsgemäß aufgebautes Heizelement
- Fig. 2: Querschnitt durch eine erfindungsgemäß aufgebaute Lenkradheizung
- Fig. 3: Prinzipbild zum Verfahrensablauf bei der erfindungsgemäßen Herstellung einer Lenkradbeheizung

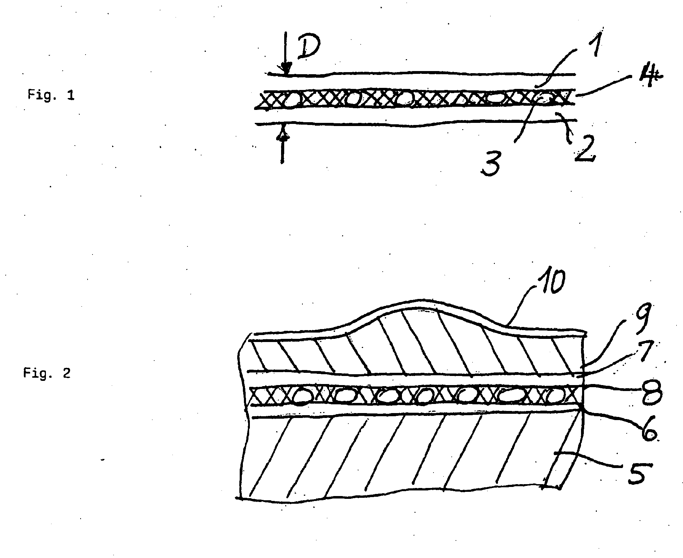

In Fig. 1 ist der einfachste Aufbau als Ausschnitt eines erfindungsgemäßen Heizelementes erkennbar, bei dem zwischen zwei Folien 1, 2, von denen eine als Grundmaterial ausgebildet ist, ein Heizleiter 3 in einem Klebstoff 4 eingebettet ist. Die Folien können aus einem hochmolekularen Kunststoff beispielsweise Polyurethan, bestehen, wobei mindestens eine der Folien als Schrumpffolie ausgebildet ist, die sich bei Einbringung von Wärme zusammen mit dem oder den Heizleitern zusammenzieht Die Folien können eine Dicke zwischen 5 - 200 µm aufweisen. Die Dicke D des Gesamtverbundes beträgt im Beispiel 200 µm zuzüglich der Heizleiterdicke. Eine konstante Dicke des Gesamtverbundes -wie in Fig. 1 und 2 dargestellt- lässt sich unter Verwendung von Litzenmaterial erreichen.

Der neue Aufbau eines erfindungsgemäß ausgebildeten Lenkrades ist aus der Prinzipdarstellung in Fig. 2 erkennbar. Auf einen Grundkörper 5 wird der Verbund aus zwei Folien 6, 7 aufgeschrumpft, zwischen denen vorher ein Heizleiter 8 eingebettet wurde. Die Schicht 7 ist als Deckschicht aus Polyurethan ausgebildet, auf der sich ein PU-Schaum 9 besonders fest und formstabil auftragen und verbinden lässt. Ein Überzugmaterial 10 bildet den Abschluss der Lenkradheizung.

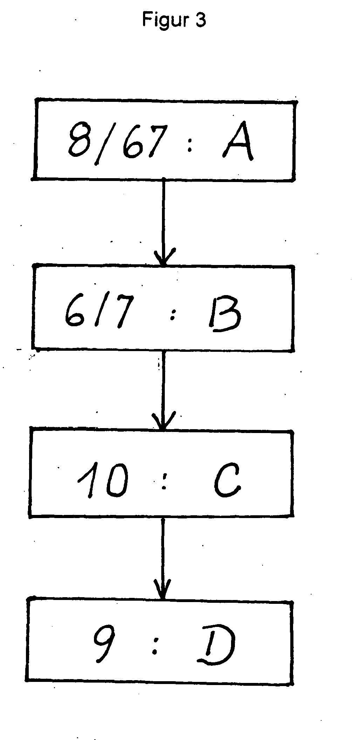

Fig. 3 zeigt noch einmal den Gesamtablauf des Herstellungsprozesses mit den Einzelschritten:
- A: Verbund aus Folien und Heizleiter als Zwischenlage herstellen.
- B: Verbund durch Hitzeeinwirkung schrumpfen.
- C: Obermaterial über den Verbund ziehen.
- D: Zwischenbereich zwischen Obermaterial und Verbund aufschäumen

Das neue Verfahren kann in einer Vorrichtung durchgeführt werden, in der die Ausgangsmaterialien der Folien und Heizleiter in Rollenform enthalten sind. Die Folienzuschnitte werden mit einem Heizleiter aus Litzen in Verbindung gebracht und über den Lenkradrohling gestülpt. Dann wird der Verbund unter Hitzeeinwirkung geschrumpft und damit auf dem Lenkradrohling fixiert.

Das Obermaterial wird über den Verbund gezogen und durch Ausschäumen unter Druck die endgültige Form des Lenkrades hergestellt.

Andere Anwendungsbereiche für das erfindungsgemäße dreidimensional verformbare Heizelement sind:

Sitzbezüge, Armlehnen, Nackenstützen, beheizbare Griffe oder Staufächer, Fußmatten oder beheizbare Bedienungsflächen. Mit einer separaten Stromversorgung können auch Kleidungsstücke oder Handschuhe erfindungsgemäß ausgebildet werden.

## Patentansprüche

1. Dreidimensional verformbares Heizelement, insbesondere für beheizbare Bedienungsflächen und für Lenkradheizungen, bestehend aus einem oder mehreren mäanderförmig auf einer Folie (2,6) als Grundmaterial verlegten Heizleiter *(3, 8)*, und einer Folie *(1*,*7)* als Deckschicht, welche zur Oberfläche des Heizelementes hin eine Sperrschicht für gasförmige, flüssige und/oder gelöste feste Chemikalien bildet, wobei der oder die Heizleiter *(3, 8)* zwischen den Folien *(1*, *2, 6, 7)* verklebt sind, **dadurch gekennzeichnet, dass** mindestens eine der Folien *(1, 2, 6, 7)* als Schrumpffolie ausgebildet ist, die sich bei Einbringung von Wärme zusammen mit dem oder den Heizleitern (3,8) zusammenzieht.

2. Dreidimensional verformbares Heizelement nach *Anspruch 1,* **dadurch gekennzeichnet, dass** der oder die Heizleiter *(3, 8)* aus Kupfer oder einer Kupfernickellegierung bestehen.

3. Dreidimensional verformbares Heizelement nach einem der vorhergehenden Ansprüche, **dadurch gekennzeichnet, dass** der oder die Heizleiter *(3, 8)* aus Chrom-, Nickel- oder Chrom-Nickel-Legierungen bestehen.

4. Dreidimensional verformbares Heizelement nach einem der vorhergehenden Ansprüche, **dadurch gekennzeichnet, dass** die Folien *(1, 2, 6, 7)* aus Polyurethan bestehen.

5. Dreidimensional verformbares Heizelement nach einem der vorhergehenden Ansprüche, **dadurch gekennzeichnet, dass** der oder die Heizleiter *(3, 8)* aus Litzen bestehen.

6. Dreidimensional verformbares Heizelement nach einem der vorhergehenden Ansprüche, **dadurch gekennzeichnet, dass** jeder Heizleiter (3,8) und jeder Einzelleiter einer Litze eine elektrische Isolierung besitzt.

7. Dreidimensional verformbares Heizelement nach einem der vorhergehenden Ansprüche, **dadurch gekennzeichnet, dass** die elektrische Isolierung aus Polyester und/oder Polyurethan besteht.

8. Lenkradheizung bestehend aus einem lenkradförmigen Grundkörper (5) und einem Bezugmaterial (10), zwischen denen ein oder mehrere Heizleiter *(8)* aus metallischem Werkstoff angeordnet sind, wobei der oder die Heizleiter zwischen zwei Folien (6,7) eingebettet sind und wobei mindestens eine zum Bezugsmaterial (10) hinweisende Folie als Dampf- oder Flüssigkeitssperrschicht ausgebildet ist, **dadurch gekennzeichnet, dass** mindestens eine der Folien als *Schrumpffolie* ausgeführt ist, die sich unter Einbringung von Wärme zusammenzieht.

9. Verfahren zur Herstellung einer Lenkradheizung, bestehend aus einem lenkradförmigen Grundkörper *(5)* und einem Überzugsmaterial *(10)*, Zwischen denen ein oder mehrere Heizleiter *(8)* eingebettet sind, wobei der oder die Heizleiter (8) zwischen zwei Folien *(6, 7)* angeordnet sind, **dadurch gekennzeichnet, dass** der Verbund aus zwei Folien (6,7), zwischen denen vorher ein Heizleiter *(8)* eingebettet wurde, auf den Grundkörper (5) aufgeschrumpft wird und unter Wärmeeinwirkung zu einem Verbundmaterial verklebt wird, wobei die eingebrachte Wärme den Heizleiter *(8)* zusammen mit den Folien (6,7) dreidimensional verformt und wobei der oder die Heizleiter (8) unter Wärmeeinwirkung mit der Folie (6) auf den Grundkörper (5) aufgeschrumpft wird.

10. Verfahren zur Herstellung einer Lenkradheizung nach Anspruch *9,* **dadurch gekennzeichnet, dass** in den zwischen Grundkörper *(5),* Verbund- und Bezugmaterial *(10)* gebildeten Zwischenraum Schaumstoff *(9)* eingepresst wird.

## Claims

1. Three-dimensionally deformable heating element, especially for heatable operator surfaces and for steering wheel heaters, consisting of one or more heat conductors (3, 8), which are arrayed in a meandering pattern on a film (2, 6) which functions as a base material, and a film (7) functioning as a covering layer, which film forms a barrier layer for gaseous, liquid and/or dissolved solid chemicals towards the surface of the heating element, said heat conductor(s) (3, 8) being bonded between the films (1, 2, 6, 7), **characterised in that** at least one of said films (1, 2, 6, 7) is embodied as a shrink film which contracts, together with the heat conductor(s) (3, 8), upon heat input.

2. Three-dimensionally deformable heating element according to claim 1, **characterised in that** the heat conductor(s) (3, 8) consist(s) of copper or a copper-nickel alloy.

3. Three-dimensionally deformable heating element according to any one of the preceding claims, **characterised in that** the heat conductor(s) (3, 8) consist(s) of chromium alloys, nickel alloys, or chromium-nickel alloys.

4. Three-dimensionally deformable heating element according to any one of the preceding claims, **characterised in that** the films (1, 2, 6, 7) consist of polyurethane.

5. Three-dimensionally deformable heating element according to any one of the preceding claims, **characterised in that** the heat conductor(s) (3, 8) consist(s) of stranded wires.

6. Three-dimensionally deformable heating element according to any one of the preceding claims, **characterised in that** each heat conductor (3, 8) and each individual conductor of a stranded wire is provided with an electrical insulation.

7. Three-dimensionally deformable heating element according to any one of the preceding claims, **characterised in that** the electrical insulation consists of polyester and/or polyurethane.

8. Steering wheel heater comprising a steering wheel-shaped basic body (5) and a covering material (10), between which one or more heat conductors (8) made of a metallic material are arranged, said heat conductor(s) being embedded between two films (6, 7), and at least one film, which faces towards the covering material (10), being embodied as a barrier layer for vapours or liquids, **characterised in that** at least one of the films is embodied as a shrink film which contracts upon heat input.

9. Method for producing a steering wheel heater, consisting of a steering wheel-shaped basic body (5) and a covering material (10), between which one or more heat conductors (8) are embedded, said heat conductor(s) (8) being arranged between two films (6, 7), **characterised in that** the composite of two films (6, 7), between which a heat conductor (8) has been previously embedded, is shrunk onto the basic body (5) and is bonded under action of heat to form a composite material, the heat input three-dimensionally deforming the heat conductor (8) together with the films (6, 7), and the heat conductor(s)(8), together with the film (6), being shrunk onto the basic body (5) under the action of heat.

10. Method for producing a steering wheel heater according to claim 9, **characterised in that** foamed plastic (9) is pressed into the gap formed between the basic body (5), the composite material and the covering material (10).

## Revendications

1. Elément de chauffage déformable en trois dimensions, notamment pour des surfaces de commande chauffables et des chauffages de volant de direction, constitué d'un ou de plusieurs conducteurs chauffants *(3, 8)*, posés en forme de méandres sur un film *(2, 6)* en tant que matériau de base, et d'un film *(1, 7)* en tant que couche de recouvrement, laquelle, en direction de la surface de l'élément de chauffage, forme une couche barrière pour des produits chimiques solides gazeux, liquides et/ou en solution, le ou les conducteurs chauffants *(3, 8)* étant collés entre les films *(1, 2, 6, 7),* **caractérisé en ce qu'**au moins un des films *(1, 2, 6, 7)* est réalisé en tant que film rétractable qui, lorsque de la chaleur est amenée, se rétracte avec le ou les conducteurs chauffants *(3, 8).*

2. Elément de chauffage déformable en trois dimensions *selon la revendication* 1, **caractérisé en ce que** le ou les conducteurs chauffants *(3, 8)* sont constitués de cuivre ou d'un alliage cuivre-nickel.

3. Elément de chauffage déformable en trois dimensions selon l'une quelconque des revendications précédentes, **caractérisé en ce que** le ou les conducteurs chauffants *(3, 8)* sont constitués d'alliages de chrome, d'alliages de nickel ou d'alliages chrome-nickel.

4. Elément de chauffage déformable en trois dimensions selon l'une quelconque des revendications précédentes, **caractérisé en ce que** les films *(1, 2, 6, 7)* sont constitués de polyuréthanne.

5. Elément de chauffage déformable en trois dimensions selon l'une quelconque des revendications précédentes, **caractérisé en ce que** le ou les conducteurs chauffants (3, 8) sont constitués de fils toronnés.

6. Elément de chauffage déformable en trois dimensions selon l'une quelconque des revendications précédentes, **caractérisé en ce que** chaque conducteur chauffant (3, 8) et chaque conducteur individuel d'un fil toronné possède une isolation électrique.

7. Elément de chauffage déformable en trois dimensions selon l'une quelconque des revendications précédentes, **caractérisé en ce que** l'isolation électrique est constituée de polyester et/ou de polyuréthanne.

8. Chauffage de volant de direction constitué d'un corps de base (5) en forme de volant de direction et d'un matériau de recouvrement (10), entre lesquels sont disposés un ou plusieurs conducteurs chauffants *(8)* constitués de matière métallique, le ou les conducteurs chauffants étant insérés entre deux films *(6, 7)* et au moins un film dirigé en direction du matériau de recouvrement (10) étant réalisé en tant que couche barrière contre la vapeur ou les liquides, **caractérisé en ce qu'**au moins un des films est réalisé en tant que *film rétractable* qui se rétracte sous l'amenée de chaleur.

9. Procédé de fabrication d'un chauffage de volant de direction, constitué d'un corps de base *(5)* en forme de volant de direction et d'un matériau de recouvrement *(10),* entre lesquels sont insérés un ou plusieurs conducteurs chauffants *(8)*, le ou les conducteurs chauffants *(8)* étant disposés entre deux films *(6, 7),* **caractérisé en ce que** le composé constitué de deux films *(6, 7),* entre lesquels un conducteur chauffant *(8)* a été inséré auparavant, est rétracté sur le corps de base (5) et est collé en un matériau composite sous l'effet de chaleur, la chaleur amenée déformant le conducteur chauffant *(8)* avec les films *(6, 7)* en trois dimensions et le ou les conducteurs chauffants *(8)* étant rétractés avec le film (6) sur le corps de base (5) sous l'effet de la chaleur.

10. Procédé de fabrication d'un chauffage de volant de direction selon la revendication 9, **caractérisé en ce que** de la mousse *(9)* est injectée dans l'espace intermédiaire formé entre le corps de base *(5)*, le matériau composite et le matériau de recouvrement *(10).*
